# EUROPÄISCHE PATENTANMELDUNG

(11) **EP 2 335 863 A1**
(43) Veröffentlichungstag der Anmeldung: **22.06.2011**
(21) Anmeldenummer: 10196202.5
(22) Anmeldetag: 21.12.2010
(51) Int. Cl.: B23K 26/03, B23K 26/24, B23K 26/08, B23K 26/067, B21D 53/08, F22B 37/10, F24J 2/26

(54) **Verfahren und Vorrichtung zum Verbinden eines ebenen Metallblechs mit einem zylindrischen metallischen Rohr durch Verwendung genau eines Lasers**

(30) Priorität: 21.12.2009 DE 102009060100
(71) Anmelder: Flexxibl GmbH, 38114 Braunschweig (DE)
(72) Erfinder: Springer, André, 30419 Hannover (DE); Beutler, Timm, 38114 Braunschweig (DE); Wendker, Kai, 38106 Braunschweig (DE)
(74) Vertreter: Einsel, Martin

(57) **Zusammenfassung**

Ein Verfahren zum Verbinden eines ebenen Metallblechs (10) mit einem zylindrischen metallischen Rohr (20) dient insbesondere zum Herstellen eines Solarabsorbers. Das zylindrische metallische Rohr (20) wird auf die ebene Oberfläche (11) des Metallblechs (10) gelegt. Es bildet sich ein langgestreckter Verbindungsbereich (30) der Oberfläche (21) des metallischen Rohrs (20) und der Oberfläche (11) des Metallblechs (10). Auf beiden Seiten des Verbindungsbereichs (30) entsteht ein spitzer Winkel (31, 32). Aus seitlicher Richtung wird ein Laserstrahl (50) in den spitzen Winkel (31, 32) zwischen dem metallischen Rohr (20) und dem Metallblech (10) fokussiert. Der Laserstrahl (50) erhitzt den Verbindungsbereich (30) des metallischen Rohrs (20) und des Metallblechs (10) auf eine Schweißtemperatur. Es tritt ein Schweißvorgang zwischen den Oberflächen (11, 21) des metallischen Rohrs (20) und des Metallblechs (10) auf. Der von einem Laser (40) abgegebene Laserstrahl (50) wird über einen Scanner (42) in zwei unterschiedliche Richtungen (53, 54) gelenkt. Über eine Spiegeloptik (45, 46) wird der Laserstrahl (53, 54; 55, 56) in die beiden spitzen Winkel (31, 32) auf den beiden Seiten des Verbindungsbereichs (30) zwischen dem metallischen Rohr (20) und dem Metallblech (10) gelenkt.

## Beschreibung

Die Erfindung betrifft ein Verfahren zum Verbinden eines ebenen Metallblechs mit einem zylindrischen metallischen Rohr, insbesondere zum Herstellen eines Solarabsorbers, bei dem das zylindrische metallische Rohr auf die ebene Oberfläche des Metallblechs gelegt wird, sodass sich ein Verbindungsbereich der Oberfläche des metallischen Rohrs und der Oberfläche des Metallblechs bildet und sich je ein spitzer Winkel auf jeder der beiden Seiten des Verbindungsbereichs ausbildet, bei dem aus seitlicher Richtung je ein Laserstrahl in jeden der beiden spitzen Winkel zwischen dem metallischen Rohr und dem Metallblech fokussiert wird und die beiden Laserstrahlen den Verbindungsbereich des metallischen Rohrs und des Metallblechs auf eine Schweißtemperatur erhitzen und ein Schweißvorgang zwischen den Oberflächen des metallischen Rohrs und des Metallblechs auftritt.

Die Erfindung betrifft ferner eine Vorrichtung zum Verbinden eines ebenen Metallblechs mit einem zylindrischen metallischen Rohr, mit der das vorstehend genannte Verfahren ausgeführt werden kann.

Solarabsorber weisen ein großflächiges Metallblech auf, meist ein Aluminiumblech, das zur thermischen Aufnahme von Solarenergie ausgebildet ist. Auf seiner von der Sonne abgewandten Seite ist parallel zur Fläche ein Rohr angeordnet, meist ein Kupferrohr. Durch dieses Kupferrohr strömt ein Medium, beispielsweise Wasser. Die vom Aluminium aufgenommene Energie wird in Form von Wärme thermisch leitend auf das Kupferrohr übertragen. Zu diesem Zweck muss das Kupferrohr thermisch gut leitend mit der Oberfläche auf der sonnenabgewandten Unterseite des Aluminiumbleches verbunden werden. Das Kupferrohr überträgt dann diese Wärmeenergie auf das strömende Medium, ein Fluid. Dieses Medium transportiert dann die thermische Energie ab, beispielsweise zu einem Wärmetauscher einer Heizungsanlage.

Ein wichtiger Schritt bei der Herstellung derartiger Solarabsorber ist demzufolge die Herstellung der thermisch leitenden Verbindung zwischen dem Kupferrohr und dem Aluminiumblech.

Ein bewährtes Verfahren hierfür ist ein Laserschweißvorgang. Herkömmlich wird hierzu ein Laserstrahl auf diejenige Seite eines Absorberbleches gerichtet, die von den aufzuschweißenden Rohren abgewandt ist, und zwar genau in dem Bereich, auf dem die Rohre aufgeschweißt werden sollen. Dieses sogenannte ,,Front-Side-Welding" führt zwar zu einer Verbindung der Rohre mit dem Absorberblech durch die Erwärmung des Bleches, zerstört jedoch die wertvolle Absorberbeschichtung und reduziert mithin die Effizienz der Absorber und führt außerdem zu einer wenig ansehnlichen Veränderung der sichtbaren Absorberoberfläche, da man die Schweißnaht sehen kann. Der Grund für dieses Vorgehen besteht darin, dass der Bereich, in dem die Rohre auf der anderen Seite des Absorberbleches auf dem Absorberblech aufliegen, relativ schlecht zugänglich ist.

Zur Verbesserung ist aus der US 6 300 591 B1 ein Laserschweißverfahren bekannt, bei dem der Verbindungsbereich zwischen dem zylindrischen Kupferrohr und der ebenen Aluminiumoberfläche durch einen Laserschweißvorgang verbunden wird. Zunächst wird das zylindrische Kupferrohr auf die ebene Aluminiumoberfläche gelegt, so dass sich ein Verbindungsbereich bildet. Zwischen der Aluminiumoberfläche und dem Kupferrohr bildet sich ein spitzer Winkel aus. In diesen spitzen Winkel hinein wird ein Laserstrahl fokussiert. Mittels dieses Laserstrahls wird der Verbindungsbereich des Aluminiums zum Kupfer auf eine Schweißtemperatur erhitzt. Dadurch schmelzen die beiden Metalle auf und eine Schweißverbindung entsteht.

Als Laser wird dabei ein gepulster Nd:YAG-Laser (chemische Zusammensetzung Y₃Al₅O₁₂) eingesetzt, also ein mit Neodym dotierter Yttrium-Aluminium-Granat-Laser. YAG-Laser sind Festkörperlaser. Alternativ werden auch Gaslaser oder andere Festkörperlaser vorgeschlagen.

Zwischen dem Laserstrahl einerseits und der ebenen Aluminium- beziehungsweise Metalloberfläche sowie der zylindrischen Metalloberfläche andererseits findet eine Relativbewegung in einer Richtung längs zur Zylinderachse der zylindrischen Metalloberfläche statt. Auf diese Weise kann ein kontinuierlicher oder gepulster Laser eingesetzt werden. Durch die Fortbewegung entsteht eine durchgehende Schweißnaht beziehungsweise eine aus vielen aufeinander folgenden punktförmigen Kontakten bestehende Schweißverbindung zwischen dem Kupferrohr und der Aluminiumoberfläche des Metallblechs.

Derartige Verfahren haben sich sehr bewährt. Da bei dem Laserschweißvorgang sich spitze Winkel auf zwei Seiten des Kupferrohrs zwischen dem Kupferrohr und der Aluminiumoberfläche bilden, wird in der Praxis auch schon mit zwei Laserköpfen gearbeitet, die sich senkrecht zum Rohr gegenüberstehen.

Ein entsprechender Vorschlag findet sich beispielsweise in der WO 2006/065195 A1 oder in etwas anderer Form in der DE 10 2007 042 387 A1. In beiden Fällen werden Laserschweißvorgänge beim Herstellen von Wärmetauschern mit Absorberplatten und einem darauf zu befestigendem Metallrohr beschrieben, bei denen zwei Laser eingesetzt werden, die es ermöglichen, von beiden Seiten aus in die spitzen Winkel einen Strahl zu richten.

Die zu den Laserköpfen zugehörigen Laser stehen in der Praxis ortsfest neben der eigentlichen Schweißvorrichtung. Die Laser werden mit den jeweiligen Optiken dabei durch Lichtleiter verbunden. Durch das Laserschweißen der Schweißnaht von zwei Seiten aus wird diese gleichmäßiger und symmetrischer. Eine Schweißung ist jedoch auch von nur einer Seite aus möglich. Dies wird in der Praxis dazu genutzt, die Schweißvorrichtung weiter zu betreiben, während einer der beiden Laser gewartet wird. Man setzt während dieser Zeit die Vortriebsgeschwindigkeit auf die Hälfte zurück, fährt also mit halber Schweißgeschwindigkeit, sodass der gleiche Wärmeeintrag wie beim Betrieb mit zwei Lasern und voller Schweißgeschwindigkeit stattfindet.

Die Winkel zwischen dem Metallblech und dem Laserstrahl werden im Stand der Technik durch die Gehäusegröße der Laseroptiken und deren Abstand von den zu schweißenden Werkstücken begrenzt.

Die bekannten Laserschweißverfahren haben sich technologisch bewährt und werden vielfach eingesetzt. Sie sind allerdings mit einem relativ hohen Energieverbrauch verbunden. Gerade bei der Solartechnik und ihren Anwendungen besteht jedoch das generelle Interesse daran, möglichst sparsam mit Energie umzugehen und auch bei der Herstellung von Anlagen zur Nutzung und Umsetzung von Solarenergie energiesparende Verfahren zu bevorzugen. Im Hinblick auf die bewährte Lasertechnologie soll jedoch auf deren Vorzüge nicht verzichtet werden.

In anderem Zusammenhang ist aus der DE 10 2007 025 461 A1 ein Vorschlag für eine Quasisimultanbearbeitung nicht von Blechen, Rohren oder Solarabsorbern, sondern für die Chipfertigung mit einem Laserscanner bekannt. Dort geht es um das Löten elektronischer Bauteile, also um Lötverfahren in der Elektronikfertigung. Dabei wird die Verwendung von Diodenlasern und eines Scannerspiegels sowie von Ablenkspiegeln vorgeschlagen, bei dem hinter einer Kollimieroptik ein Strahl fokussiert und auf einen Scannerspiegel gelenkt wird. Der Scannerspiegel leitet den Laserstrahl auf benachbart zum Laser liegende Ablenkspiegel, die ihn dann aus unterschiedlichen Richtungen auf einen Bearbeitungsbereich lenken. Die gesamte Optik mit Scannerspiegeln und Ablenkspiegeln befindet sich in einem gemeinsamen Bereich oberhalb des zu lötenden elektronischen Bauteils.

Für das Schweißen von zylindrischen Rohren auf ebene Flächen, wie bei der Herstellung von Solarabsorbern ist ein solches Vorgehen allerdings nicht geeignet. Die äußeren Randbedingungen sind ganz andere, als beim Auflöten kleiner elektronischer Bauelemente auf Platinen.

Wünschenswert wäre es daher, weitere alternative Verfahren zur Durchführung dieses Verbindungsschrittes bei Solarabsorbern zur Verfügung zu haben.

Aufgabe der Erfindung ist es, ein derartiges Verfahren vorzuschlagen.

Diese Aufgabe wird bei einem gattungsgemäßen Verfahren bei der Erfindung dadurch gelöst, dass von genau einem Laser ein Laserstrahl abgegeben wird, dass der abgegebene Laserstrahl über einen Scanner in zumindest zwei unterschiedliche Richtungen gelenkt wird, und dass über eine Spiegeloptik der vom Scanner abgelenkte Laserstrahl abwechselnd in jeden der beiden spitzen Winkel auf den beiden Seiten des Verbindungsbereichs zwischen dem metallischen Rohr und dem Metallblech gelenkt wird.

Mit einem derartigen Verfahren entstehen erhebliche Vorteile. Es wird nur ein Laser mit einer Laseroptik benötigt, was die Kosten einer entsprechenden Schweißvorrichtung im Vergleich zu einer Laserschweißanlage mit zwei Lasern zum Erreichen beider spitzer Winkel am Verbindungsbereich erheblich reduziert. Im Vergleich zu einem herkömmlichen und in der US 6,300,591 B1 explizit beschriebenen Verfahren entsteht der erhebliche Vorteil, dass eine Schweißnaht nicht nur von einer Seite, sondern auch von beiden Seiten gelegt wird, obwohl ebenfalls wie in dieser Druckschrift nur ein Laser verwendet wird. Gegenüber dieser Konzeption entsteht also eine erhebliche Qualitätsverbesserung des entstehenden Solarabsorbers mit einer deutlich verbesserten Schweißnaht und dadurch auch verbesserten thermischen Übergangsbedingungen und verringerter Störanfälligkeit.

Gegenüber Konzepten wie aus der WO 2006/065195 A1 oder DE 10 2007 042 387 A1 entsteht der gravierende Vorteil, dass bei gleicher Schweißwirkung statt zwei Lasern nur ein Laser eingesetzt wird, wodurch erhebliche Kostenvorteile entstehen. Darüber hinaus entstehen im Folgenden noch deutlich werdende Vorteile durch die wesentlich verbesserten Einstellmöglichkeiten und die Abstimmung des Bearbeitungsvorganges von den beiden Seiten aus aufeinander.

Ein Scanner ist ein auf dem Markt befindliches Bauelement, das in entsprechende Bearbeitungsköpfe integrierbar ist. Der Scanner weist einen Scannerspiegel auf, der über einen Motor mit Frequenzen im Kilohertzbereich um einen einstellbaren Winkel hin und her gedreht wird. Ein Laserstrahl, der auf einen solchen Scannerspiegel trifft, wird auf diese Weise in beliebige gewünschte Positionen umlenkbar.

Durch den Einsatz von zwei Spiegeln beidseitig des Rohres entsteht außerdem ein fertigungstechnischer Vorteil, denn der Spiegel ist anders als herkömmlich einstellbar, und zwar sowohl was den Einstrahlwinkel als auch was die Höhe betrifft. Damit wird die Schweißgeometrie des Laserkopfes derart verstellbar, dass verschiedene Rohrdurchmesser und verschiedene Blechstärken mit ein und derselben Anlage ohne große technische Maßnahmen geschweißt werden können. Eine Möglichkeit für einen entsprechenden Bearbeitungskopf wird noch im Rahmen dieser Beschreibung näher angegeben.

Zugleich kann durch die Einstellmöglichkeit auch sehr präzise und detailiert auf die Werkstücke eingegangen werden und es wird möglich, noch spitzere Winkel als bei herkömmlichen Konstruktionen realisieren zu können. Die Laseroptik bei dem herkömmlichen Verfahren etwa nach der US 6,300,591 B1 verhindert ein Einstellen eines Winkels auf weniger als etwa 13° allein aus Platzgründen; darüber hinaus wird die Einstellung bereits im Bereich dieser unteren Grenzen sehr unhandlich und unpräzise. Bei einer Verwendung von Spiegeln, gemäß der Erfindung, können nahezu beliebig kleine und damit spitze Winkel zwischen dem Laserstrahl und der Oberfläche des Metallblechs gewählt werden, sodass die mathematisch ebenfalls beliebig kleinen spitzen Winkel zwischen der Unterseite der im Schnitt kreisförmigen Metallrohre und der Oberfläche der Metallbleche sauber erreicht und die dort befindlichen Werkstücke so aufgeschmolzen werden können, wie dies für die in Aussicht genommene Schweißnaht gewünscht wird.

Zugleich wird dieses mit dem gleichen Laser von beiden Seiten aus erreicht, sodass eine völlig symmetrische Schweißnaht geschaffen wird.

Der Laserstrahl kann also noch besser in die Schweißkehle gelangen und auf diese Weise den Werkstoff, also insbesondere Aluminium und gegebenenfalls Kupfer mit noch weniger Schweißenergie aufschmelzen. Anders betrachtet, kann bei gleichem Energieeinsatz die Schweißgeschwindigkeit erhöht werden. In beiden Fällen werden im Ergebnis die Fertigungskosten reduziert.

Dadurch, dass nur ein Laser verwendet wird und durch die Spiegel die Schweißgeometrie praktisch frei einstellbar ist, werden auch erhebliche Variationsmöglichkeiten für die zu erzeugende Schweißnaht gegeben. So kann nicht nur eine durchgehende Schweißnaht erzielt werden, sondern auch Punktschweißungen oder durchgehende Steppnähte, wenn diese gewünscht werden. Es kann auch in Schweißrichtung gleichzeitig links und rechts vom Rohr oder in Abschnitten versetzt links oder rechts oder auch abwechselnd eine Schweißnaht gelegt werden. Die geschweißte Anbindungslänge kann frei gewählt werden. Damit sind auch Sonderfertigungen relativ einfach möglich, wenn beispielsweise ungewöhnlich geformte Stücke für spezielle Bauwerke benötigt werden.

Für die verschiedensten Werkstückkombinationen aus Rohrdurchmesser, Rohrwandstärke, Blechstärke und auch Material kann jeweils ein Optimum aus Festigkeit, Wärmeenergie, Schweißenergie, Schweißnahtfestigkeit und Schweißgeschwindigkeit eingestellt werden.

Als vorteilhaft hat es sich herausgestellt, wenn als Laser ein kontinuierlich arbeitender Laser eingesetzt wird. Im Gegensatz zu der herkömmlichen Form eines gepulsten Schweißens ergibt sich auf diese Weise die Möglichkeit, die Anbindungslänge zu variieren.

Besonders bevorzugt ist es, wenn als Laser Diodenlaser eingesetzt werden. Ein Schweißverfahren mittels Diodenlasern bietet nämlich zwei erhebliche energetische Vorteile, gerade in Zusammenhang mit den erwähnten Merkmalen unter Einsatz von zwei Spiegeln.

Zunächst zeigt eine nähere Betrachtung, dass der aufzuschmelzende Werkstoff Aluminium ein Absorptionsverhalten besitzt, welches eine besonders gute Energieabsorption bei Wellenlängen im Bereich von etwa 800 nm besitzt. Das bedeutet, dass Energie mit einer derartigen Wellenlänge besonders gut vom Aluminium aufgenommen und in Wärme umgesetzt werden kann, was gerade bei einem Schweißvorgang natürlich sinnvoll ist.

Dabei zeigt sich nun, dass die Wellenlänge der herkömmlich benutzten Nd:YAG-Laser bei 1064 nm liegt, während die Wellenlänge von Diodenlasern im Bereich von 910 nm bis 1030 nm liegt, also günstiger im Hinblick auf das Absorptionsverhalten von Aluminium.

Darüber hinaus besitzt ein Diodenlaserstrahl einen Wirkungsgrad von etwa 40 %, während ein vergleichbarer YAG-Laserstrahl einen Wirkungsgrad von lediglich etwa 5 % besitzt. Aufgrund dieses weitaus besseren Wirkungsgrades muss für die Erzeugung eines Diodenlaserstrahls weniger Primärenergie eingesetzt werden, als bei einem vergleichbaren YAG-Laserstrahl. Demnach benötigt ein Diodenlaser eine Eingangsleistung, die etwa um den Faktor 8 niedriger liegt, als die einem YAG-Lasers.

Auch Kupfer weist eine deutlich bessere Absorptionseigenschaft bei typischen Wellenlängen von Diodenlasern auf, was ebenfalls zu einer erheblichen Energieeinsparung führt. Über eine Scanneroptik kann ein kontinuierlicher Laserstrahl abwechselnd auf beide Seiten des Metallrohrs, insbesondere des Kupferrohrs gelenkt werden. Diodenlaser geben einen kontinuierlichen Laserstrahl ab, was zusätzlich begünstigt, dass anders als bei herkömmlichen gepulsten Prozessen nur ein Laser eingesetzt wird.

Dadurch, dass die Anbindungslänge der Fügestellen in der Schweißnaht variiert werden können, erfolgt eine bessere Einflussmöglichkeit der Festigkeitseigenschaften sowie des Wärmeübergangs. Es kann nämlich auch der Einfluss des Durchmischungsverhaltens von Kupfer und Aluminium besser berücksichtigt werden, um so die Eigenschaften der auf diese Weise hergestellten Solarabsorber zu optimieren.

Mit der Erfindung ist es auch möglich, Solarabsorber nicht nur aus Aluminiumblechen und Kupferrohren zu fertigen, sondern auch eine Kostengünstigere Kombination aus Aluminiumblechen und Aluminiumrohren zu schweißen. Die Eigenschaften der Schweißnähte aus Aluminium und Aluminium-Werkstoffen können mit der Erfindung ebenfalls in gewünschter Form optimiert werden. Durch diese Optimierung kann auch den herkömmlich auftretenden Korrosionsproblemen bei Kombinationen aus Aluminiumblechen mit Aluminiumrohren in gewissem Maße entgegen getreten werden.

Als sehr sinnvoll hat sich darüber hinaus das Vorsehen einer Rohrandrückrolle erwiesen. Mit der Rohrandrückrolle kann der Vortrieb der Kombination aus Metallrohr und Metallblech gezielter erfolgen und auch der mechanische Einfluss beim Herstellen der Schweißnaht durch das Andrücken des Metallrohres auf der Oberfläche des Metallbleches genau bemessen werden, ohne eine Deformierung der beteiligten Fügepartner herbeizuführen.

Dadurch, dass der Laserstrahl präzise in den Verbindungsbereich der beiden Fügepartner in der Schweißkehle gerichtet wird, können sogar verschiedene Positionen in dieser Fügezone gezielt angesprochen werden. Neben einer bevorzugt auf die Blech-(Aluminium-)seite und einer bevorzugt auf die Rohr-(Kupfer-)seite gerichteten Führung des Laserstrahls können auch gezielt Bereiche im unmittelbaren Überschneidungsbereich angesprochen werden. Dadurch findet jeweils eine unterschiedliche Durchmischung der beiden Werkstoffe und damit auch des daraus resultierenden Gefüges statt. Dies kann anhand von Mikroschliffen, Mikrohärteanalysen und EDX-Analysen hinsichtlich der gebildeten Phasen, der Schweißpunktgeometrie, der Härteeigenschaften und der Elementzusammensetzung untersucht werden.

Zusätzlich kann man die entstehenden Schweißverbindungen auch durch Abreiß- beziehungsweise Abschältests auf ihre Festigkeit untersuchen und so eine optimierte Korrelation der mechanischen Eigenschaften mit dem Schweißpunktgefüge herbeiführen.

Durch eine Variation der Scannparameter können auch die Anbindungslänge und die Abstände zwischen den Schweißungen variiert und optimiert werden.

Die Fokussierung der Laserstrahlung erfolgt nicht wie in der DE 10 2007 025 461 A1 direkt hinter der Kollimieroptik, also bevor die Strahlung auf den Scanner trifft, sondern stattdessen wird der kollimierte und noch nicht fokussierte Strahl über den erwähnten Scanner umgelenkt und wird erst kurz vor dem Auftreffen auf das Werkstück mit einer Fokussierlinse fokussiert. Dadurch kann der Auslenkweg der Strahlung bei einer gegebenen Fokussierbrennweite erreicht werden, der ausreicht, um das Rohr von beiden Seiten aus zu bestrahlen. Das wäre bei einer Konstruktion wie in der DE 10 2007 025 461 A1 nicht möglich.

Eine beidseitige Schweißung wird hier erfindungsgemäß also mit örtlich entkoppelten Optiken möglich, die im Stand der Technik weder sinnvoll noch vorgesehen sind.

Bevorzugt ist ferner vorgesehen, dass der Strahl aus der Horizontalen auf den Scanner trifft und anschließend nach unten abgelenkt wird. Dadurch wird eine wesentlich breitere Auslenkung und auch eine präzisiere Steuerung des erzielbaren Auslenkwinkels möglich.

Beide Umlenkspiegel sind erfindungsgemäß eng benachbart zu der Fügestelle des Metallrohres auf dem Metallblech angeordnet. Durch diese Anordnung wird das Schweißen in der Kehle, also den beiden spitzen Winkeln, zwischen dem flächigen Metallblech und dem Metallrohr möglich; bei Schweißvorgängen wie etwa in der DE 10 2007 025 461 A1 würde der Strahl nahezu senkrecht auf das Rohr oder das Blech treffen.

Im Folgenden werden anhand der Zeichnung zwei Ausführungsbeispiele der Erfindung näher erläutert. Es zeigen:
**Figur 1** eine perspektivische Darstellung einer ersten Ausführungsform der Erfindung;
**Figur 2** eine perspektivische Darstellung einer zweiten Ausführungsform der Erfindung,
**Figur 3** eine Ansicht auf einen Bearbeitungskopf aus einer Ausführungsform der Erfindung;
**Figur 4** eine Seitenansicht auf den Bearbeitungskopf aus Figur 3;
**Figur 5** eine perspektivische Ansicht des Bearbeitungskopfes aus den Figuren 3 und 4;
**Figur 6** eine weitere perspektivische Ansicht auf den Bearbeitungskopf aus den Figuren 3 bis 5;
**Figur 7** eine Teilansicht des Bearbeitungskopfes aus den Figuren 3 bis 6; und
**Figur 8** eine weitere Teilansicht eines Abschnittes des Bearbeitungskopfes aus den Figuren 3 bis 6.

Beide Ausführungsformen des Verfahrens werden rein schematisch dargestellt. Weder ist die Darstellung maßstabsgetreu, noch sind die einzelnen Elemente naturgetreu dargestellt.

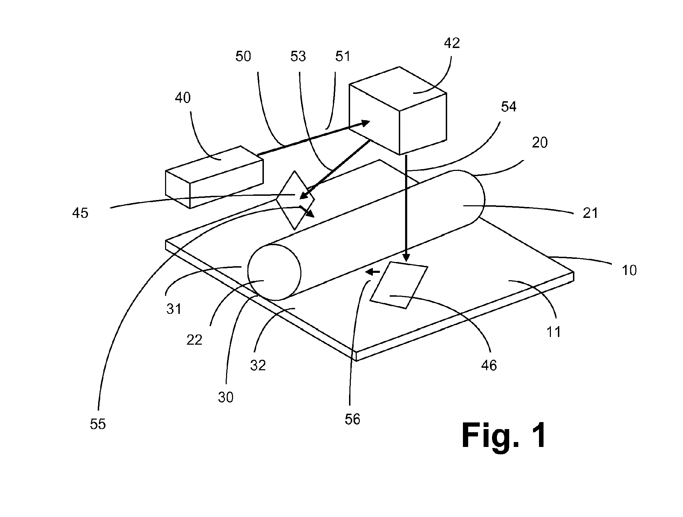

Man sieht in der Figur 1 ein Metallblech 10. Es kann sich insbesondere um ein Aluminiumblech handeln. Dieses Metallblech 10 soll zu einem Solarabsorber verarbeitet werden. Nach Fertigstellung wird die in der Figur 1 vom Betrachter abgewandte und nicht zu sehende Oberfläche des Metallblechs 10 der Sonne zugewandt. Die Sonneneinstrahlung trifft also auf diese in der Figur 1 nicht zu sehende Oberfläche und wird dort in Wärmeenergie umgewandelt, also das Metallblech 10 insgesamt erwärmt.

Der Betrachter sieht stattdessen die andere Oberfläche 11 des Metallblechs 10. Diese Oberfläche 11 soll nun mit einem Verfahren gemäß der Erfindung mit einem Metallrohr 20 verbunden werden. Das Metallrohr 20 ist beispielsweise ein Kupferrohr, kann aber unter Umständen auch ein Aluminiumrohr sein. Dieses Metallrohr oder metallische Rohr 20 besitzt eine Oberfläche 21, die auf der Oberfläche 11 des Metallblechs 10 zu liegen kommt, wenn das Metallrohr 20 auf das Metallblech 10 gelegt wird.

Nach der Verarbeitung zu einem Solarabsorber strömt dann ein Medium, insbesondere ein Fluid wie Wasser oder mit einem Frostschutzmittel versetztes Wasser durch das Innere innerhalb der Innenseite 22 des Metallrohrs 20. In dieses Fluid im Inneren des Metallrohrs 20 soll die von dem Metallblech 10 aus der aufgenommenen Solarenergie entstandene Wärmeenergie überführt werden, und zwar durch thermischen Kontakt. Hierzu soll eine thermischleitende Verbindung zwischen den Oberflächen 11 und 21 des Metallblechs 10 und des Metallrohrs 20 geschaffen werden.

Hierzu soll ein Verbindungsbereich 30 zwischen dem Metallblech 10 und dem Metallrohr 20 thermisch besonders gut leitend sein. Darüber hinaus soll er auch mechanisch für eine Verbindung sorgen und das Metallrohr 20 dauerhaft an dem Metallblech 10 halten. Hierzu wird eine Schweißverbindung im Verbindungsbereich 30 gelegt.

Aus geometrischen Gründen entsteht nun auf den beiden Seiten des Verbindungsbereichs 30 zwischen der Oberfläche 21 des Metallrohrs 20 und der Oberfläche 11 des Metallblechs 10 jeweils ein spitzer Winkel. Diese beiden spitzen Winkel 31 auf der einen Seite und 32 auf der anderen Seite erstrecken sich räumlich betrachtet über die ganze Länge des Metallrohres 20 parallel zu einer Achse dieses Metallrohres.

Um diese Schweißnaht in dem Verbindungsbereich 30 legen zu können, wird eine Laserschweißung vorgenommen.

Hierzu ist ein Laser 40 vorgesehen. Dieser Laser 40 ist in einer bevorzugten Ausführungsform ein kontinuierlich strahlender Laser, insbesondere ein Diodenlaser. Der Diodenlaser 40 erzeugt einen Laserstrahl 50, dessen weiterer Verlauf noch im Folgenden erörtert wird.

Es ist nämlich zusätzlich zu dem Diodenlaser 40 ein Scanner 42 vorgesehen, der über eine Steuereinrichtung (nicht dargestellt) einen Scannerspiegel mittels eines Motors um einen einstellbaren Winkel hin und her drehen kann. Der Laserstrahl 50, der auf diesen Scannerspiegel im Scanner 42 trifft, wird auf diese Weise in zumindest zwei dargestellte Richtungen umgelenkt, je nach der aktuellen Stellung des Scannerspiegels.

Der Laserstrahl 50 verläuft also zunächst als Strahl 51 vom Laser 40 zum Scanner 42. In diesem wird er bevorzugt alternierend in zwei Richtungen 53 und 54 abgelenkt. Der Scanner 42 ist also kein Strahlteiler im eigentliche Sinne, sondern eher eine Art ,,Strahlverteiler", der den gesamten Laserstrahl 50 beziehungsweise 51 zeitlich versetzt eng aufeinander folgend zunächst in die Richtung 53 und anschließend in die Richtung 54 und so fort ablenkt.

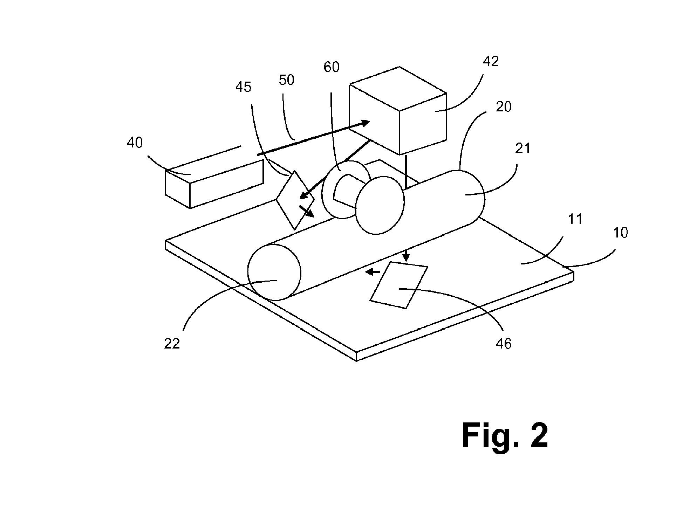

Der Laserstrahl aus der Richtung 53 fällt dann auf eine Spiegeloptik 45, der Laserstrahl aus der Richtung 54 fällt auf eine Spiegeloptik 46. Die Spiegeloptiken 45 und 46 werden in der Darstellung in der Figur 1 durch jeweils eine Spiegelfläche repräsentiert. Nicht dargestellt ist, dass diese Spiegeloptiken 45, 46 auch beweglich sein können und dass sie je nach Anwendungsfall auch aus mehreren miteinander gekoppelten Spiegeln bestehen können. Die Fokussierlinsen oberhalb der Spiegel sind in der Darstellung in den Figuren 1 und 2 weggelassen, um die weiteren Elemente deutlicher darstellen zu können. Jedenfalls fällt dann von den Spiegeloptiken 45, 46 der Laserstrahl in gespiegelter Form als Laserstrahl 55 beziehungsweise 56 fokussiert in einen der beiden spitzen Winkel 31, 32 auf den beiden Seiten des Verbindungsbereichs 30 des Metallrohrs 20 mit dem Metallblech 10.

Die exakte Einfallrichtung der Laserstrahlen 55 und 56 in die spitzen Winkel 31 und 32 auf den Verbindungsbereich 30 zur Herstellung der Schweißnaht ist nahezu beliebig einstellbar. Dadurch kann eine sehr zielgenaue und energetisch besonders zweckmäßige Beaufschlagung eines exakt gewünschten Bereiches der beiden Fügepartner bestehend aus dem Metallrohr 20 und dem Metallblech 10 gewählt werden. Der Strahl kann auch nahezu flächenparallel zur Oberfläche 11 des Metallblechs 10 gewählt werden, was aus geometrischen Gründen im Stand der Technik ausgeschlossen ist.

Während des vorbeschriebenen Vorganges kann und wird üblicherweise eine Vorwärtsbewegung des Metallbleches 10 mit dem darauf liegenden Metallrohr 30 längs zur Achse des Metallrohres 30 vorgenommen. Die alternierend auftretenden Laserstrahlen 55 und 56 laufen also mit der Zeit in der Figur 1 den ihnen zugeordneten spitzen Winkel 31, 32 parallel zur Achse des Rohres 20 ab und erzeugen so eine Schweißnaht.

Es werden also Punktschweißungen ebenso wie Linienschweißungen möglich, ohne dass die Anlage umgebaut werden muss. Hierzu sind dann lediglich elektronische Maßnahmen in der Steuerung des Scanners 42 erforderlich.

In der Figur 2 ist eine geringfügig modifizierte oder vervollständigte Ausführungsform, verglichen mit der Figur 1, zu erkennen. Zusätzlich zu den bereits beschriebenen Elementen ist hier eine Andrückrolle 60 vorgesehen. Diese Andrückrolle 60 sorgt für einen leichten Druck auf das Metallrohr 20 und drückt dieses damit auf die Oberfläche 11 des Metallbleches 10. Durch diesen mechanischen Druck wird zum Einen die Vorwärtsbewegung in synchroner Form von Metallblech 10 und Metallrohr 20 sichergestellt und zum Anderen auch ein stets optimaler Kontakt der Oberflächen 11 und 21 während des Schweißvorganges miteinander.

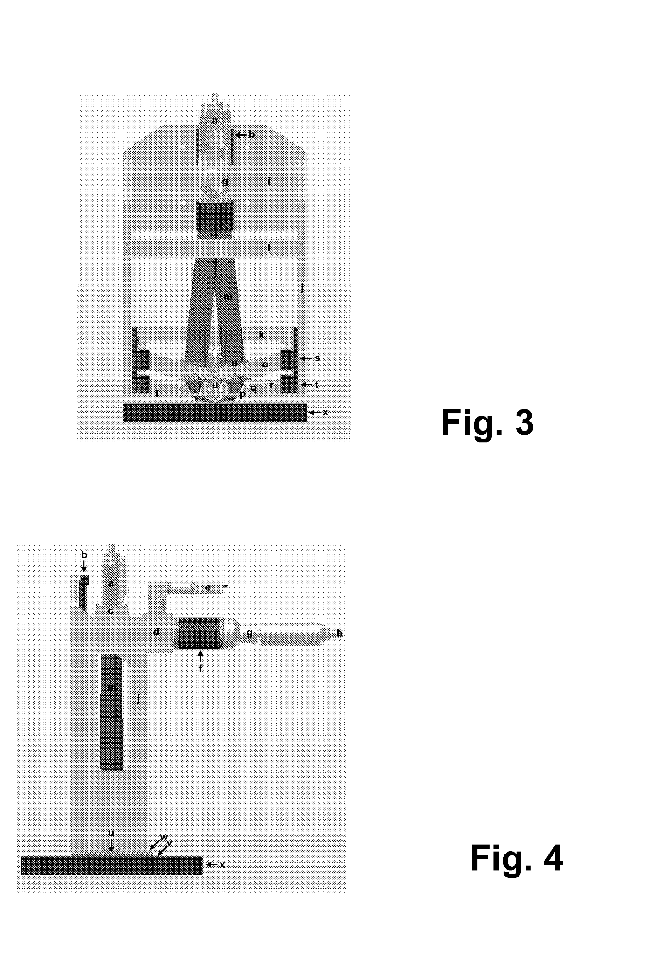

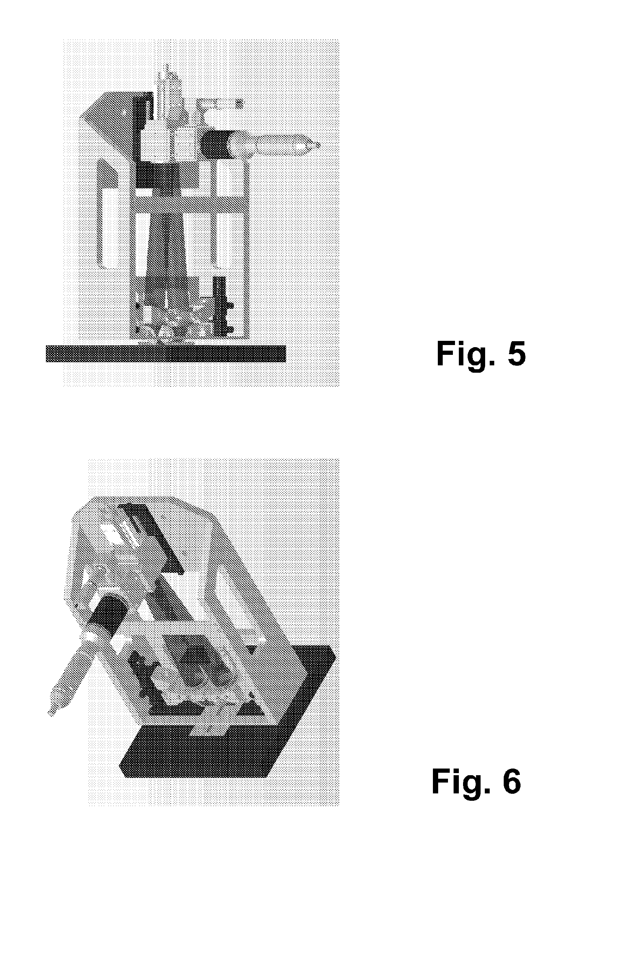

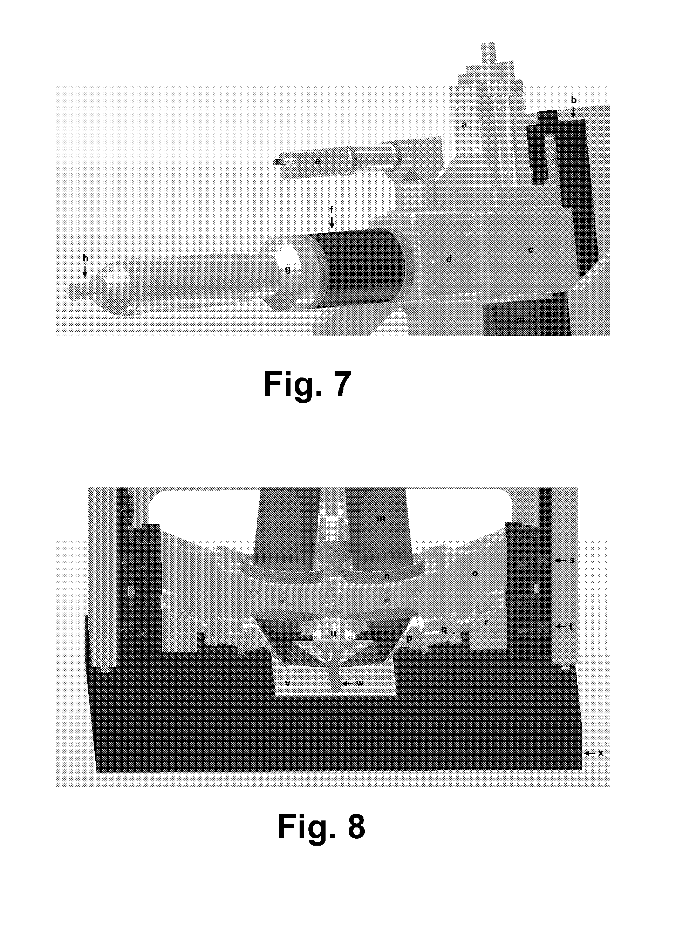

In den weiteren **Figuren 3 bis 8** ist ein Bearbeitungskopf in verschiedenen Ansichten dargestellt, der eingesetzt werden kann, um das flache Metallblech 10 und das zylindrische Metallrohr 20 mittels einer kontinuierlichen Strahlung des Lasers zu verbinden.

Dieser Bearbeitungskopf besteht in der dargestellten bevorzugten Ausführungsform aus mehreren optischen Komponenten. Diese ermöglichen den Anschluss der Laserquelle über eine Lichtleitfaser h an den erwähnten Bearbeitungskopf.

Ein Faserstecker g nimmt die Lichtleitfaser h auf und leitet einen Laserstrahl m in einen Kollimator f. Der Kollimator f ist seinerseits mit einem Auskoppelelement d verbunden.

Auf diese Weise wird es möglich, mittels einer LCD-Kamera i ein Livebild vom Treffpunkt des Laserstrahls m aufzunehmen.

Anschließend ist ein Scannerspiegelwürfel c vorgesehen, in welchem sich ein Scannerspiegel befindet. Der Scannerspiegel wird über ein Scannersystem a angetrieben. Das Scannersystem a pendelt den Laserstrahl m mit einer Frequenz von etwa 100 Hz abwechselnd auf die beiden Fokussierlinsen n, welche den Laserstrahl m bündeln.

Anschließend wird der Laserstrahl m über Umlenkspiegel p in den spitzen Winkel beziehungsweise die Kehle zwischen das Metallrohr 20 beziehungsweise w und das Metallblech 10 beziehungsweise v geleitet. Durch die Bewegung des Scannerspiegels wird auf diese Weise eine abwechselnde Bestrahlung der beiden Seiten des Metallrohres 20 beziehungsweise der beiden spitzen Winkel 31 und 32 ermöglicht.

Aufgrund des komplexen Strahlengangs und der benötigten Präzision in der Ausrichtung der einzelnen Komponenten ist vorgesehen, dass umfangreiche Verstellmöglichkeiten zur Justage des Systems vorbereitet sind.

Die Umlenkspiegel p sind über Linearpositioniereinheiten t sowie über eine Spiegelhalterung q in drei Ebenen verschiebbar. Darüber hinaus sind sie mittels einer Spiegelkippeinheit r in zwei Winkeln kippbar. Auf diese Weise wird eine exakte Positionierung der Umlenkspiegel p sowie eine Verstellung des horizontalen und des vertikalen Einstrahlwinkels möglich.

Zur exakten Positionierung der Fokussierlinsen n sind diese über Llnearpositioniereinheiten s in zwei Ebenen verschiebbar sowie über die Linsenhalterung o kippbar.

Das Scannersystem a ist an einer Linearpositioniereinheit b befestigt, die eine Höhenverstellung des gesamten oberen Teils des Bearbeitungskopfes erlaubt. Für die exakte Justage der Optikkomponenten ist der Auftreffpunkt des Laserstrahls m außerdem über die oben bereits erwähnte Beobachtungskammera e bestimmbar.

Sowohl die Umlenkspiegel p wie auch die Fokussierlinsen n und auch das Scannersystem a werden wassergekühlt, um die Komponenten vor einer Überhitzung zu schützen.

Die Umlenkspiegel p sind in der dargestellten Ausführungsform zusätzlich mit einem Temperatursensor ausgestattet. Dadurch wird berücksichtigt, dass es aufgrund der Vorfokussierung des Laserstrahls m schon bei geringen Verunreinigungen der Spiegeloberfläche zu einem Temperaturanstieg aufgrund der erhöhten Absorbtion kommen kann. Ein solcher Temperaturanstieg könnte andernfalls innerhalb sehr kurzer Zeit zu einer Zerstörung des Bauteils führen, was auf diese Weise vermieden wird.

Die Andrückrolle 60 beziehungsweise u presst das Metallrohr 20 beziehungsweise w im zu schweißenden Bereich auf das auf einem Bearbeitungstisch x aufliegende Metallblech 10 beziehungsweise v. Eine Feineinstellung der verwendeten Andrückkraft der Andrückrolle 60 beziehungsweise u wird über eine Feder ermöglicht.

Der Seitenrahmen j des Bearbeitungskopfes gewährleistet eine gewünschte Steifigkeit des Systems. Auf diese Weise können im Betrieb jegliche Instabilitäten der einzelnen Komponenten vermieden werden.

Zusätzliche Verstrebungen 1 sowie eine untere Rückplatte k sorgen für eine weitere Erhöhung der Steifigkeit des Gesamtsystems. Eine Blechummantelung y der Rahmenkonstruktion sorgt für einen Staubschutz der empfindlichen optischen Komponenten. Dieser Staubschutz kann durch einen angelegten Überdruck innerhalb des Bearbeitungskopfes unterstützt werden.

Zusätzlich können die Umlenkspiegel p durch einen Gasstrom vor dem entstehenden Rauch beim Schweißen geschützt werden, wobei dieser Gasstrom bevorzugt durch Querstromdüsen aufgebracht wird.

Über eine obere Rückplatte i wird der Bearbeitungskopf an einer Verfahreinrichtung befestigt.

### Bezugszeichenliste

- 10: Metallblech, insbesondere Aluminiumblech
- 11: Oberfläche des Metallblechs 10
- 20: Metallrohr, insbesondere Fluidrohr aus Kupfer oder Aluminium
- 21: Oberfläche des Metallrohrs
- 22: Innenseite des Metallrohrs 20
- 30: Verbindungsbereich des Metallblechs 10 mit dem Metallrohr 20
- 31: spitzer Winkel auf einer Seite des Verbindungsbereichs 30
- 32: spitzer Winkel auf der anderen Seite des Verbindungsbereichs 30
- 40: Laser
- 42: Scanner
- 45: erste Spiegeloptik
- 46: zweite Spiegeloptik
- 50: Laserstrahl
- 51: Laserstrahl vom Diodenlaser 40 zum Scanner 42
- 53: Laserstrahl vom Scanner 42, erster alternativer Verlauf
- 54: Laserstrahl vom Scanner 42, zweiter alternativer Verlauf
- 55: Laserstrahl in den ersten Verbindungsbereich 31
- 56: Laserstrahl in den zweiten Verbindungsbereich 32
- 60: Andrückrolle
- a: Scannersystem
- b: Linearpositioniereinheit (Scannersystem)
- c: Scannerspiegelwürfel
- d: Auskoppelelement
- e: Kamera
- f: Kollimator
- g: Faserstecker
- h: Lichtleitfaser
- i: obere Rückplatte
- j: Seitenrahmen
- k: untere Rückplatte
- l: Verstrebungen
- m: Laserstrahl
- n: Fokussierlinse
- o: Linsenhalterung
- p: Umlenkspiegel
- q: Spiegelhalterung
- r: Spiegelkippeinheit
- s: Linearpositioniereinheiten (Linse)
- t: Linearpositioniereinheiten (Spiegel)
- u: Andrückrolle
- v: Aluminiumblech
- w: Kupferrohr
- x: Bearbeitungstisch
- y: Blechummantelung

## Patentansprüche

1. Verfahren zum Verbinden eines ebenen Metallblechs (10) mit einem zylindrischen metallischen Rohr (20), insbesondere zum Herstellen eines Solarabsorbers,
bei dem das zylindrische metallische Rohr (20) auf die ebene Oberfläche (11) des Metallblechs (10) gelegt wird, sodass sich ein Verbindungsbereich (30) der Oberfläche (21) des metallischen Rohrs (20) und der Oberfläche (11) des Metallblechs (10) bildet und sich je ein spitzer Winkel auf jeder der beiden Seiten des Verbindungsbereichs (30) ausbildet, bei dem aus seitlicher Richtung je ein Laserstrahl (50) in jeden der beiden spitzen Winkel (31, 32) zwischen dem metallischen Rohr (20) und dem Metallblech (10) fokussiert wird und die beiden Laserstrahlen (50) den Verbindungsbereich (30) des metallischen Rohrs (20) und des Metallblechs (10) auf eine Schweißtemperatur erhitzen und ein Schweißvorgang zwischen den Oberflächen (11, 21) des metallischen Rohrs (20) und des Metallblechs (10) auftritt,
**dadurch gekennzeichnet,**
**dass** von genau einem Laser (40) ein Laserstrahl (50) abgegeben wird, **dass** der abgegebene Laserstrahl (50) über einen Scanner (42) in zumindest zwei unterschiedliche Richtungen (53, 54) gelenkt wird, und **dass** über eine Spiegeloptik (45, 46) der vom Scanner (42) abgelenkte Laserstrahl (53, 54; 55, 56) abwechselnd in jeden der beiden spitzen Winkel (31, 32) auf den beiden Seiten des Verbindungsbereichs (30) zwischen dem metallischen Rohr (20) und dem Metallblech (10) gelenkt wird.

2. Verfahren nach Anspruch 1,
**dadurch gekennzeichnet,**
**dass** als Laser (40) ein kontinuierlich strahlender Laser eingesetzt wird.

3. Verfahren nach Anspruch 1 oder 2,
**dadurch gekennzeichnet,**
**dass** als Laser (40) ein Diodenlaser eingesetzt wird.

4. Verfahren nach Anspruch 1, 2 oder 3,
**dadurch gekennzeichnet,**
**dass** die Spiegeloptik (45, 46) derart einstellbar ist, dass der Winkel zwischen der Oberfläche (11) und dem Laserstrahl (55, 56) gezielt änderbar ist.

5. Verfahren nach einem der vorstehenden Ansprüche,
**dadurch gekennzeichnet,**
**dass** die Spiegeloptik (45, 46) derart einstellbar ist, dass die Höhe des Laserstrahls (55, 56) oberhalb der Oberfläche (11) an einem vorgegebenen Punkt des Verbindungsbereichs (30) gezielt änderbar ist.

6. Verfahren nach einem der vorstehenden Ansprüche,
**dadurch gekennzeichnet,**
**dass** der von dem Laser (40) abgegebene Laserstrahl (50) durch den Scanner (42) alternierend in die beiden unterschiedlichen Richtungen (53, 54) gelenkt wird.

7. Verfahren nach einem der vorstehenden Ansprüche,
**dadurch gekennzeichnet,**
**dass** eine Andrückrolle (60) während des Schweißvorgangs das Metallrohr (20) gegen das Metallblech (10) drückt.

8. Verfahren nach einem der vorstehenden Ansprüche,
**dadurch gekennzeichnet,**
**dass** das Metallblech (10) ein Aluminiumblech und das metallische Rohr (20) ein Kupferrohr ist.

9. Vorrichtung zum Verbinden eines ebenen Metallblechs (10) mit einem zylindrischen metallischen Rohr (20), insbesondere zum Herstellen eines Solarabsorbers, mit einem Laser (40),
zur Durchführung eines Verfahrens nach einem der Ansprüche 1 bis 8,
bei dem ein Bearbeitungskopf eingesetzt wird, welcher eine Beobachtungskammera (e) zur Aufnahme eines Livebildes vom Auftreffpunkt des Laserstrahls (50) aufweist.
